(19) Europäisches Patentamt

European Patent Office

Office européen des brevets

(11) Veröffentlichungsnummer: **0 088 925**
**B1**

(12) **EUROPÄISCHE PATENTSCHRIFT**

(45) Veröffentlichungstag der Patentschrift: 30.09.87

(21) Anmeldenummer: 83101904.7

(22) Anmeldetag: 26.02.83

(51) Int. Cl.⁴: **B 60 K 41/02**

(54) **Vorrichtung zum Regeln einer Kraftfahrzeug-Antriebseinheit.**

(30) Priorität: 17.03.82 DE 3209645

(43) Veröffentlichungstag der Anmeldung:
21.09.83 Patentblatt 83/38

(45) Bekanntmachung des Hinweises auf die
Patenterteilung:
30.09.87 Patentblatt 87/40

(84) Benannte Vertragsstaaten:
DE FR GB IT NL SE

(56) Entgegenhaltungen:
WO-A-79/00781
DE-A-2 833 961
DE-A-2 906 587
DE-A-3 004 930
GB-A-2 080 910

(73) Patentinhaber: Dr.Ing.h.c. F. Porsche
Aktiengesellschaft
Porschestrasse 42
D-7000 Stuttgart 40 (DE)

(72) Erfinder: Bofinger, Gerd
Feuerbacher Weg 101
D-7000 Stuttgart 30 (DE)
Erfinder: Stelter, Norbert, Dipl.-Ing.
Talstrasse 17
D-7251 Weissach (DE)
Erfinder: Wüst, Rainer, Ing. grad.
Mörickestrasse 47
D-7251 Weissach (DE)

Courier Press, Leamington Spa, England.

EP 0 088 925 B1

## Beschreibung

Die Erfindung betrifft eine Vorrichtung zum Regeln einer Kraftfahrzeug-Antriebseinheit nach dem Oberbegriff des Anspruchs 1.

Eine derartige Regelvorrichtung ist bekannt aus DE—A 30 04 930. Sie dient dem Zweck, eine Möglichkeit für einen weitgehend ruckfreien Kupplungseingriff zu schaffen. Hierzu wird die zwischen dem Antriebsmotor und dem Getriebe eines Kraftfahrzeugs angeordnete Kupplung automatisch mit einem hilfskraftbeaufschlagten Stellmotor betätigt. Dieser Stellmotor sowie ein weiterer, ein Stellglied betätigender Stellmotor werden von einer Regelvorrichtung gesteuert, die in Abhängigkeit von den vor und hinter der Kupplung gemessenen Drehzahlen arbeitet. Sind diese Drehzahlen von Null verschieden, so wird zunächst der zweite Stellmotor so gesteuert, daß beide Drehzahlen gleich werden. Anschließend wird der erste Stellmotor zum Einrücken der Kupplung beaufschlagt.

Ausgehend von dieser bekannten Vorrichtung besteht die Aufgabe der Erfindung darin, eine Kraftfahrzeug-Antriebseinheit so zu regeln, daß neben einem möglichst ruckfreien Fahren auch ein getriebeschonendes Fahren ermöglicht wird. Hierzu müssen das Anfahrmoment und die Anfahrdrehzahl so gewählt werden, daß sich eine möglichst geringe Verlusteistung an der Kupplung ergibt.

Zur Lösung dieser Aufgabe sind die kennzeichnenden Merkmale des Anspruchs 1 vorgesehen. Da das an der Kupplung übertragene Drehmoment proportional dem Quadrat der Motordrehzahl ist, wirkt die erfindungsgemäße Regelvorrichtung wie die bisher häufig zum Anfahren von Kraftfahrzeugen benutzen Fliehkraftkupplungen, deren Drehmoment ebenfalls quadratisch mit der Drehzahl ansteigt.

Der vorteil der Erfindungsgemäßen Vorrichtung liegt darin, daß im Gegensatz zur mechanisch gesteuerten Fliehkraftkupplung, die mit einer durch die Mechanik vorgegebenen Motordrehzahl arbeitet, die Anfahrdrehzahl durch das Fahrpedal vorgegeben werden kann.

Mit dem Fahrpedal wird in bekannter Weise über einen Kennlinienwandler und ein an ihn angeschlossenes Stellglied für die Drosselklappe das Motordrehmoment gesteuert. Zugleich wird die Fahrpedalstellung in einen zweiten Kennlinienwandler eingegeben, dessen Ausgangssignal a in das Steuergerät eingespeist wird. In dem Steuergerät wird das Produkt $a \times n^2$ gebildet und auf die Stelleinrichtung der kupplung geschaltet. Auf diese Weise ist das von der Kupplung übertragene Drehmoment auf das Motordrehmoment abgestimmt und nach dem Quadrat der Motordrehzahl einregelbar. Durch den Kupplundsvorgang nimmt der Motor Keine unzulässige Drehzahlen an. Die exakte Regelung des Kupplungsdrehmoments ermöglicht ein materialschonendes Kuppeln.

Weitere, die Erfindung ausgestaltende Merkmale sind in den Unteransprüchen enthalten.

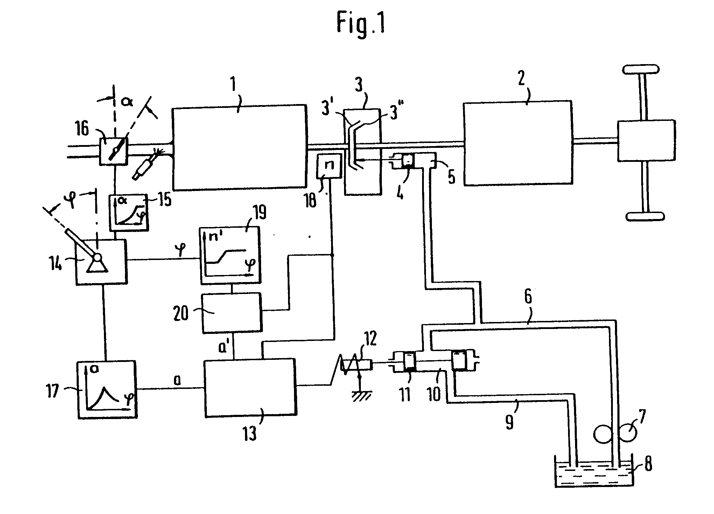

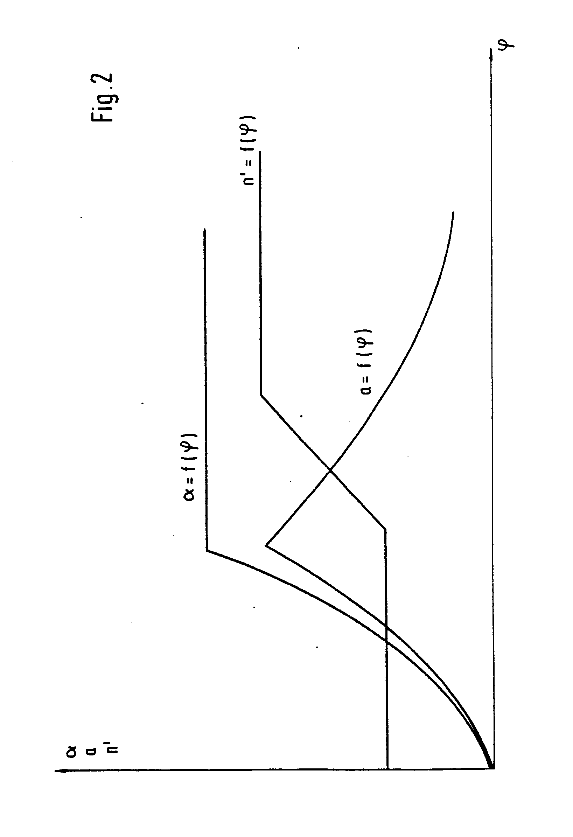

In der Zeichnung, Fig. 1 ist die erfindungsgemäße Regel-Vorrichtung als Blockschaltbild dargestellt, Fig. 2 zeigt die hierfür benutzten Kennlinien.

Zwischen einem Hubkolben-Motor 1 und einem Getriebe 2 eines Kraftfahrzeuges ist eine hydraulisch betätigte Kupplung 3 mit ihren beiden Reibscheiben 3' und 3'' angeordnet, deren Reibungskraft von einem Hydraulikkolben 4 aufgebracht wird. Der zugehörige Hydraulikzylinder 5 ist an eine Hydraulikleitung 6 angeschlossen, die von einer Pumpe 7 aus einem Vorratsbehälter 8 versorgt wird. Zur Druckregelung ist zwischen der Hydraulikleitung 6 und einer Rücklaufleitung 9 zum Vorratsbehälter 8 ein Druckregelventil 10 eingebaut; sein Regelkolben 11 ist durch eine elektromagnetische Stelleinrichtung 12 verschiebbar, die an ein elektronisches Steuergerät 13 angeschlossen ist.

Ein Fahrpedalgeber 14 für die Stellung φ des Fahrpedals ist über einen ersten Kennlinienwandler 15, in dem eine Kennlinie: Drosselklappenwinkel α in Abhängigkeit von der Fahrpedalstellung φ gespeichert ist, mit einem Stellglied 16 für die Drosselklappe verbunden. Außerdem ist der Fahrpedalgeber 14 an einen zweiten Kennlinienwandler 17 angeschlossen, in dem eine Funktion $a = f(\varphi)$ gespeichert ist, und der mit dem Steuergerät 13 verbunden ist. Weiterhin ist an das Steuergerät 13 ein Geber 18 für die Motordrehzahl angeschaltet. In einer Rechenschaltung des Steuergerätes 13 wird aus den Eingangsgrößen a und n das Produkt $a \cdot n^2$ gebildet und als Ausgangsgröße auf den elektromagnetischen Stellantrieb 12 für das Druckregelventil 10 gegeben, so daß der Druck der Hydrulikleitung 6 ebenso das an der Kupplung 3 übertragbare Drehmoment gleich dem Produkt $a \cdot n^2$ ist.

Um auch die Veränderung des Reibwertes der Reibscheiben 3' und 3'' bei der Regelung berücksichtigen zu können, ist an den Fahrpedalgeber 14 ein dritter Kennlinienwandler 19 angeschlossen, der eine Referenzkennlinie $n' = f(\varphi)$ erzeugt. Sein Ausgangssignal n' ist zu einem Vergleicher 20 geführt, der mit dem Drehzahlgeber 18 verbunden ist und dessen Ausgangssignal a' auf das Steuergerät 13 geschaltet ist.

Die tatsächliche Motordrehzahl wird mit dieser Referenzkennlinie verglichen und bei einer Abweichung zwischen n und n', die einer Änderung des Reibwertes der Reibscheiben 3', 3'' entspricht, gibt der Vergleicher 20 ein Signal a' an das Steuergerät, das zur Bildung des Gesamtproduktes herangezogen wird, so daß das Ausgangssignal des Steuergerätes dem Produkt $a \cdot a' \cdot n^2$ gleich ist.

Anstelle des Steuergerätes 13 kann auch ein Mikroprozessor verwendet werden, in dem die drei Kennlinienwandler als Speicher integriert sind.

## Patentansprüche

1. Vorrichtung zum Regeln einer Kraftfahrzeug-Antriebseinheit aus Kolbenmotor (1), Kupplung

(3) und Getriebe (2), mit einem Geber (18) für die Motordrehzahl (n), wobei über eine Stelleinrichtung die auf die Kupplung wirkende Kraftgesteuert wird, wobei ein Fahrpedalgeber (14) für die Stellung des Fahrpedals die Drosselklappeneinstellung (α) des Motors und damit das Motordrehmoment steuert, und wobei der Fahrpedalgeber (14) ein von der Fahrpedalstellung (φ) abhängiges Signal an ein Steuergerät (13) gibt, an das auch der Motordrehzahlgeber (18) angeschlossen ist und das auf die Stelleinrichtung (12) der Kupplung (3) ein Signal gibt, dadurch gekennzeichnet, daß der Fahrpedalgeber (14) über einen ersten Kennlinienwandler (15) die Drosselklappeneinstellung (α) des Motors steuert, und daß der Fahrpedalgeber (14) über einen zweiten Kennlinienwandler (17) ein von der Fahrpedalstellung (φ) abhängiges Signal (a) an das Steuergerät (13) gibt, das auf die Stelleinrichtung (12) der Kupplung (3) ein mit der Motordrehzahl progressiv ansteigendes Signal gibt, das etwa gleich dem Produkt (a×n²) ist, so daß das von der Kupplung (3) übertragene Drehmoment ebenfalls proportional (a×n²) ist.

2. Vorrichtung nach Anspruch 1, dadurch gekennzeichnet, daß im zweiten Kennlinienwandler (17) eine Funktion a=f (φ) gespeichert ist, die aus einem annähernd parabolisch ansteigenden und einem etwa hyperbolisch abfallenden Ast zusammengesetzt ist.

3. Vorrichtung nach Anspruch 1, dadurch gekennzeichnet, daß das Signal der Motordrehzahl (n) mit einem durch einem dritten Kennlinienwandler (19) erzeugten Signal für eine Referenzkennlinie n'=f (φ) verglichen wird, und daß die Abweichung zwischen Referenzdrehzahl n' und Motordrehzahl (n) als weitere Kenngröße a' an das Steuergerät (13) geschaltet ist, dessen Ausgangssignal dem Produkt a · a' · n² gleich ist.

4. Vorrichtung nach Anspruch 3, dadurch gekennzeichnet, daß die Referenzkennlinie n'=f (φ) im unteren Bereich parallel der φ-Achse verläuft, dann etwa linear ansteigt und im oberen Bereich wieder parallel der φ-Achse verläuft.

5. Vorrichtung nach Anspruch 1, dadurch gekennzeichnet, daß die im ersten Kennlinienwandler (15) gespeicherte Kennlinie α=f (φ) im unteren Bereich etwa parabolisch ansteigt und im oberen Bereich parallel der φ-Achse verläuft.

6. Vorrichtung nach Anspruch 1, dadurch gekennzeichnet, daß die zwischen Motor (1) und Getriebe (2) angeordnete Kupplung (3) hydraulisch betätigt wird, deren statischer Druck p durch das Steuergerät (13) nach der Funktion p=a · n² gesteuert ist.

7. Vorrichtung nach Anspruch 1 mit einem Kennfeldspeicher oder Kennfeldwandler anstelle des ersten Kennlinienwandlers, dadurch gekennzeichnet, daß der Kennfeldspeicher bzw. Kennfeldwandler die Drosselklappenstellung (α) in Abhängigkeit von der Fahrpedalstellung (φ) und der Motordrehzahl (n) derart steuert, daß bei konstanter Fahrpedalstellung (φ) das Motor-Antriebsmoment konstant bleibt.

**Revendications**

1. Dispositif pour régler le groupe moteur d'un véhicule, constitué par un moteur à pistons (1), un embrayage (3) et une boîte de vitesses (2), le dispositif comportant un capteur (18) pour la vitesse de rotation (n) du moteur, la force agissant sur l'embrayage étant commandée par l'intermédiaire d'un dispositif de réglage, un capteur (14) pour la position de la pédale d'accélérateur commandant le réglage (α) du papillon des gaz du moteur et de ce fait le couple moteur, et le capteur (14) pour la pédale d'accélérateur envoyant un signal dépendant de la position (φ) de la pédale d'accélérateur à un appareil de commande (13) auquel est également raccordé le capteur (18) pour la vitesse de rotation du moteur et qui envoie un signal au dispositif de réglage (12) de l'embrayage (3), caractérisé en ce que le capteur (14) pour la pédale d'accélérateur commande par l'intermédiaire d'un premier convertisseur de courbes caractéristiques (15) le réglage (α) du papillon des gaz du moteur, et en ce que le capteur (14) pour la pédale d'accélérateur envoie par l'intermédiaire d'un second convertisseur de courbes caractéristiques (17) un signal (a) dépendant de la position (φ) de la pédale d'accélérateur à l'appareil de commande (13) qui envoie au dispositif de réglage (12) de l'embrayage (3) un signal augmentant progressivement avec la vitesse de rotation du moteur, lequel signal est sensiblement égal au produit (a×n²) de sorte que le couple de rotation transmis par l'embrayage (3) est également proportionnel à (a×n²).

2. Dispositif selon la revendication 1, caractérisé en ce qu'on met en mémoire dans le second convertisseur de courbes caractéristiques (17) une fonction a=f (φ) qui est constituée par une branche approximativement parabolique ascendante et par une branche approximativement hyperbolique descendante.

3. Dispositif selon la revendication 1, caractérisé en ce que le signal de la vitesse de rotation (n) du moteur est comparé à un signal produit par un troisième convertisseur de courbes caractéristiques (19) pour une courbe caractéristique n'=f (φ), et en ce que l'écart entre la vitesse de rotation de référence (n') et la vitesse de rotation (n) du moteur est envoyé en tant qu'autre grandeur caractéristique a' à l'appareil de commande (13), dont le signal de sortie est égal au produit a×a'×n².

4. Dispositif selon la revendication 3, caractérisé en ce que la courbe caractéristique de référence n'=f (φ) est, dans la zone inférieure, parallèle à l'axe (φ), puis monte ensuite de façon sensiblement rectiligne et est à nouveau parallèle à l'axe (φ) dans la zone supérieure.

5. Dispositif selon la revendication 1, caractérisé en ce que la courbe caractéristique a=f (φ) mise en mémoire dans le premier convertisseur de courbes caractéristiques (15) s'élève de façon sensiblement parabolique dans la zone inférieure et est parallèle à l'axe (φ) dans la zone supérieure.

6. Dispositif selon la revendication 1, caractérisé en ce que l'embrayage (3) placé entre le moteur (1) et la boîte de vitesses (2) est commandé hydrauliquement et sa pression statique p est commandée par l'appareil de commande (13) selon la fonction $p=a\times n^2$.

7. Dispositif selon la revendication 1, comportant une mémoire de zones caractérisitique ou un convertisseur de zones caractéristiques à la place du premier convertisseur de courbes caractéristiques, caractérisé en ce que la mémoire de zones caractéristiques ou le convertisseur de zones caractéristiques commande la position (α) du papillon des gaz enfonction de la position (φ) de la pédale d'accélérateur et de la vitesse de rotation (n) du moteur, de telle sorte que, pour une position constante (φ) de la pédale d'accélérateur le couple l'entraînement du moteur reste constant.

**Claims**

1. A control device of a propulsion unit for motor vehicles consisting of a piston engine (1), a clutch (3) and transmission (2), with a transmitter (18) for engine speed (n), the force acting on the clutch being controlled via an adjustment device, an accelerator transmitter (14) for the position of the accelerator controlling the throttle valve adjustment (α) of the engine and thereby the engine torque, and the accelerator transmitter (14) transmitting a signal independent of the accelerator position (φ) to a control device (13), to which the engine speed transmitter (18) is also connected and which transmits a signal to the adjustment device (12) of the clutch (3), characterised in that the accelerator transmitter (14) via a first characteristic curve convertor (15) controls the throttle valve adjustment (α) of the engine, and that the accelerator transmitter (14) transmits a signal (a) which is independent of the accelerator position (φ) via a second characteristic curve convertor (17) to the control device (13), which transmits a signal to the adjustment device (12) of the clutch which increases progressively with the engine speed, and which is approximately equal to the product $(a\times n^2)$, so that the torque transmitted by the clutch (3) is likewise proportional $(a\times n^2)$.

2. A device according to claim 1, characterised in that in the second characteristic curve convertor (17) a function $a=f(\varphi)$ is stored, which is composed of an approximately parabolically increasing and an approximately parabolically decreasing branch.

3. A device according to claim 1, characterised in that the signal of the engine speed (n) is compared with a signal for a reference characteristic curve $n'=f(\varphi)$ generated by a third characteristic curve convertor (19), and that the deviation between reference speed n' and engine speed (n) is connected as a further characteristic quantity a' to the control device (13), the output signal of which is equal to the product $a\cdot a'\cdot n^2$.

4. A device according to claim 3, characterised in that the reference characteristic curve $n'=f(\varphi)$ extends parallel to the φ axis in the lower region, then increases approximately linearly and in the upper region again parallel to the φ axis.

5. A device according to claim 1, characterised in that the characteristic curve $a=f(\varphi)$ stored in the first characteristic curve convertor (15) increases approximately parabolically in the lower region and again extends parallel to the φ axis in the upper region.

6. A device according to claim 1, characterised in that the clutch (3) disposed between the engine (1) and the transmission (2) is hydraulically actuated and the static pressure p of the clutch is controlled by the control device (13) according to function $p=a\cdot n^2$.

7. A device according to claim 1 with a performance graph store or performance graph convertor instead thereof, characterised in that the performance graph store or performance graph convertor controls the throttle valve position (α) in dependence upon the accelerator position (φ) and the engine speed (n), so that with a constant accelerator position (φ) the engine torque remains constant.

Fig.1

0 088 925

Fig.2